# EUROPEAN PATENT SPECIFICATION

(11) **EP 3 446 856 B1**
(45) Date of publication and mention of the grant of the patent: **30.12.2020**
(21) Application number: 18187159.1
(22) Date of filing: 02.08.2018
(51) Int. Cl.: B29C 64/153, B29C 64/205, B33Y 10/00, B29C 64/141

(54) **ELECTROSTATIC POLYMER AEROSOL DEPOSITION AND FUSING OF SOLID PARTICLES FOR THREE-DIMENSIONAL PRINTING**
ELEKTROSTATISCHE POLYMER-AEROSOLABSCHEIDUNG UND VERSCHMELZUNG VON FESTSTOFFPARTIKELN FÜR DEN DREIDIMENSIONALEN DRUCK
DÉPÔT D'AÉROSOL DE POLYMÈRE ÉLECTROSTATIQUE ET FUSION DE PARTICULES SOLIDES POUR UNE IMPRESSION TRIDIMENSIONNELLE

(30) Priority: 22.08.2017 US 201715683531
(43) Date of publication of application: 27.02.2019
(73) Proprietor: Palo Alto Research Center Incorporated, Webster, NY 14580 (US)
(72) Inventor: JOHNSON, David Mathew, San Francisco, CA California 94107 (US); ELROD, Scott A., Portola Valley, CA 94028 (US); BIEGELSEN, David K., Portola Valley, CA California 94028 (US); BECK, Victor Alfred, Livermore, CA California 94550 (US)
(74) Representative: Gill Jennings & Every LLP

(56) References cited:
- EP-A1- 3 196 003
- WO-A1-2016/205743
- US-A1- 2015 210 009

## Description

### TECHNICAL FIELD

This disclosure relates to polymer spray deposition, more particularly to polymer spray deposition using powders.

### BACKGROUND

Custom manufacturing of parts is a growing industry and has wide ranging applications. Traditionally, injection molding machines and other machining techniques were used to create models of objects or to create the objects themselves. More specifically, heated materials like glass, metals, thermoplastics, and other polymers are injected into an injection mold specifically formed in the shape of the desired object. The material can cool in the mold and take on the shape of the mold to form the object. Injection molds are expensive and time-consuming to create and changes to the shape of the object are difficult to accommodate without further increasing the time and expense of creating the object.

The additive manufacturing industry arose in response to the expense, time, and difficulty in changing injection molds to create models or objects themselves. Known additive manufacturing techniques include fused deposition modeling (FDM), stereolithography (SLA), selective laser sintering (SLS), and jetting systems among others. Each known additive manufacturing technique has limitations in materials, expense, and/or volume capabilities that prevent the production of small run, customized manufacturing and prototyping using a complete set of thermoplastic materials. Further, known additive manufacturing techniques are unable to accurately create a part with mechanical properties, surface finish, and feature replication of the quality object produced by traditional techniques like injection molding.

In situations in which additive manufacturing does not produce parts of sufficient performance for an application, an entire industry of rapid computer numerical control (CNC) machining and rapid injection molding using low cost tools has arisen. However, these techniques are significantly more expensive than additive manufacturing techniques and have their own process limitations.

The industry was forced to decide between a high quality, high volume capability object produced by the traditional, but expensive, inflexible, and time-consuming techniques like injection molding and additive manufacturing techniques that produced a lower quality object, perhaps without the desired structural integrity, and sometimes without the desired materials, but with greater speed and flexibility.

For example, FDM and SLS are limited in the type of material able to be used and create a less than 100% density object. Rapid CNC molding has better quality objects with great feature detail and finishes, but remains expensive. Prototypes created with the known additive manufacturing techniques are often refined until a final design is selected at which point an injection mold is created for large scale, high quality injection molding production. Such a multi-phase production process is also time-consuming and expensive.

One method involves polymer spray deposition (PSD). This process forms a spray or aerosol of polymer drops and charges them to cause them to selectively deposit on a charged surface. The formation of the aerosol may take many forms. Many of them typically require controlled temperature and an inert atmosphere. These typically result in higher costs and more complex manufacturing environments.

EP 3196003 A1 discloses an additive deposition system capable of depositing additive materials across a substrate.

### SUMMARY

An embodiment is an additive manufacturing system that has an aerosol generator to aerosolize a powder, a deposition surface, a surface charging element to apply a blanket charge to the deposition surface, a charging print head to selectively remove portions of the blanket charge from the deposition surface, and a transport system to transport the aerosol powder from the aerosol generator to the deposition surface, the transport system having an aerosol charging element to apply charge opposite of the blanket charge to the aerosol powder.

Another embodiment is an additive manufacturing process that includes creating an aerosol from a powder at a spray generator, charging the aerosol to produce a charged aerosol having a first charge, forming a blanket charge on a deposition surface having a second charge of an opposite polarity from the first charge, selectively removing regions of the blanket charge, and transporting the charged aerosol to the charged regions to form structures on the charged regions from the charged aerosol.

### BRIEF DESCRIPTION OF THE DRAWINGS

Figure 1 shows an embodiment of a three-dimensional additive manufacturing system.
Figure 2 shows another view of a three-dimensional additive manufacturing system.
Figure 3 shows an embodiment of a return and recycling path.
Figure 4 shows an embodiment of a three-dimensional additive manufacturing system with a support material.
Figure 5 shows an embodiment of a method of three-dimensional additive manufacturing.

### DETAILED DESCRIPTION OF THE EMBODIMENTS

The embodiments here provide the benefits of three-dimensional, digital, additive manufacturing techniques with a broader range of thermoplastic materials than would otherwise be attainable. They result in feature size resolution of the produced objects similar in complexity and structural integrity to more traditional manufacturing techniques, such as injection molding processes. The systems and methods here can aerosolize and create three-dimensional objects out of high molecular weight polymers powders and other thermoplastics, such as nylon, polystyrene, polycarbonate, polypropylene, polysulfone, and acetal. The use of powders may alleviate some of the manufacturing restraints on temperature and atmospheres that affect fluids.

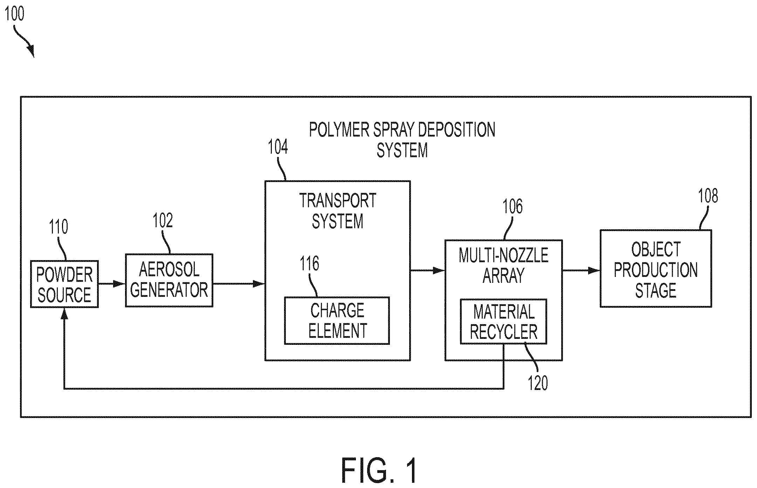

Figure 1 shows a block diagram of an example polymer deposition system 100 that includes an aerosol generator 102, a transport system 104, a multi-nozzle array 106, and an object production stage 108. The aerosol generator 102 receives powder from a powder source 110 and. The aerosol of the powder can be formed in many different methods well known in the art, such as those disclosed in US Patent No. 2,862,646, or found at www.tsi.com/small-scale-powder-disperser-3443. In one embodiment, a stream of high velocity gas is blown into a container partially filled with power. The airflow entrains the particles and the chaotic nature of the flow mixes the air and powder such that it creates an aerosol. This aerosol can be removed from the container with another flow or a vacuum.

A transport system 104 then transports the aerosolized powder from the aerosol generator 102 to a multi-nozzle array 106 that dispenses the powder onto a surface in the object production stage. The transport system 104 includes a charge element 116 that charges the spray with a charge of a first polarity. As will be discussed in more detail later, the deposition surface will have regions with an opposite charge to attract the aerosolized powder particles to those regions. The charged aerosol is then applied to the surface using the multi-nozzle array to the deposition surface. Any 'waste' or leftover material may be recycled by the material recycler 120.

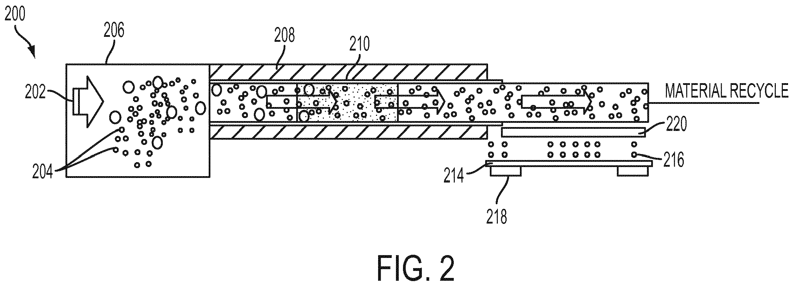

Figure 2 shows an alternative view of an additive manufacturing system 200. The aerosol generator 206 aerosolizes a powder shown as particles 204. The transport system 208, possibly consisting of an air stream 202, transports the aerosolized powder from the aerosol generator 206 to the deposition surface 214. In one embodiment, the transport system may include tubing, with insulation as needed, a sheath flow of air, and possible filtration. In addition, the transport stream may include an inertial impactor to allow size selection, as well as filters as needed.

Charge element 210 applies a charge of a first polarity to the aerosol. This may involve a set of electrodes on either side of the transport system to generate an electric field through which the aerosol passes. The deposition surface 214 will receive the charged particles such as 216. In one embodiment, the deposition surface resides on a stage 218 that may be a three-axis (x, y, and z) stage that moves relative to the deposition nozzle array.

Prior to the charged particles reaching the deposition surface selective regions of the deposition surface received an opposite charge. In one embodiment, a first charging device such as a corotron 220 (a corona charging device) applies a blanket charge to the deposition surface, the charge being of a opposite polarity to the first polarity. While Figure 2 shows the charging device 220, it will only be present prior to the arrival of the powder spray.

After the blanket charge formed on the deposition surface, another charging device, such as an ionographic print head, neutralizes the charge from the non-part portions of the surface. The particles will be attracted to the portions of the deposition surface that still have the opposite charge.

Once the particles from the powder spray reach the deposition surface and 'stick' to the oppositely charged regions, the parts or other structures will begin to form. During or after formation of the parts, the powder material may undergo heating to fuse the material into the parts. Fusing can be achieved through the application of heat and/or pressure. Heat can be applied through the use of an infrared source, a heated roller, or the use of high temperature air. Other embodiments may involve application of ultraviolet light to cure powder formations made from UV-curable powders. In addition, the powder aerosol may also be pressurized to assist with the fusing.

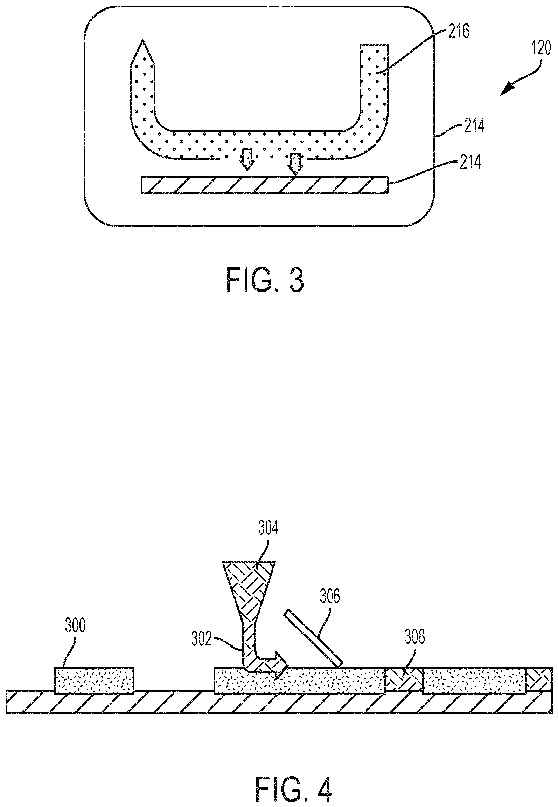

As the powder material collects in the selected regions of the deposition surface, portions of the powder spray will fall off the deposition surface. In some embodiments, the powder material that does not stick could be recycled back to the aerosol generator 206. The material recycling will typically occur away from the heat or other energy used to fuse the parts forming at the charged regions of the deposition surface. Figure 3 shows an example of the recycling path 120 from Figure 1. The powder material flows past the deposition surface 214 and some of the particles 216 are attracted to the regions of the deposition surface 214.

As shown in Figure 4, once the powder material is fused to form the parts such as 300, an optional support material 302 may fill in the gaps such as 308 to create a smooth flat surface. The material could reach the gaps from a nozzle 304 and a doctor blade 306 or other implement would smooth it in to the gaps to provide more structurally robust parts.

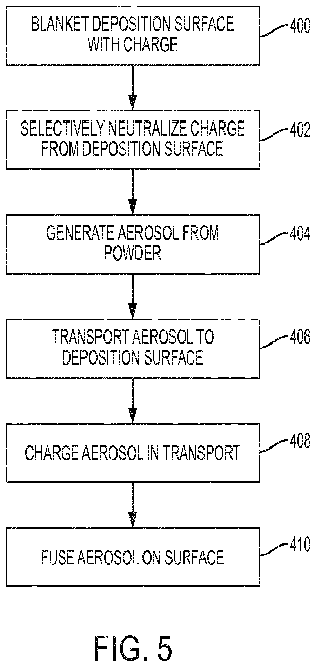

Figure 5 shows an embodiment of an overall process flow. At 400, a deposition surface receives a blanket charge at 400. Another device, such as an ionographic print head, selectively neutralizes charge from the deposition surface at 402. Meanwhile, the system generates an aerosol from a powder at 404 and transports it to the deposition surface 406. While the aerosol is in transport, it undergoes charging at 408. As the aerosol reaches the deposition surface it is fused onto the surface to form the desired structures at 410. In an optional step, a support material fills the gaps, discussed previously.

In this manner, three-dimensional additive manufacturing can create parts in a manufacturing process using powders. This may provide a less complex and less expensive manufacturing process for formation of a polymer for spray deposition.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. An additive manufacturing system (200), comprising;
an aerosol generator (206) to aerosolize a powder to produce an aerosol powder (204);
a deposition surface (214);
a surface charging element (220) to apply a blanket charge to the deposition surface;
a charging print head to selectively remove portions of the blanket charge from the deposition surface; and
a transport system (104) to transport the aerosol powder from the aerosol generator to the deposition surface, the transport system having an aerosol charging element (116) to apply charge opposite of the blanket charge to the aerosol powder such that the aerosol forms structures on portions of the deposition surface where charge remains.

2. The system of claim 1, further comprising an inertial impactor in the transport system (104) to select sizes of particles.

3. The system of claim 1, further comprising a filter in the transport system (104).

4. The system of claim 1, further comprising a dispenser to dispense a supporting material (302) between the structures.

5. The system of claim 1, further comprising a movable stage (218) upon which the deposition surface (214) rests.

6. The system of claim 1, wherein the surface charging element (220) comprises a corotron.

7. An additive manufacturing process, comprising:
creating an aerosol (204) from a powder at a spray generator;
charging the aerosol to produce a charged aerosol having a first charge;
forming a blanket charge on a deposition surface (214) having a second charge with an opposite polarity from the first charge;
selectively removing regions of the blanket charge, leaving charged regions on the deposition surface; and
transporting the charged aerosol to the charged regions to form structures on the charged regions from the charged aerosol.

8. The process of claim 7, further comprising applying energy to fuse the structures.

9. The process of claim 7, further comprising applying a support material (302) to fill in gaps between the structures.

10. The process of claim 7 wherein forming the blanket charge on the deposition surface (214) comprises forming the charge using a corotron.

## Patentansprüche

1. Additives Fertigungssystem (200), das umfasst;
einen Aerosolgenerator (206), der ein Pulver aerosoliert, um ein Aerosolpulver (204) herzustellen;
eine Abscheidungsfläche (214);
ein Oberflächen-Ladeelement (220), das eine durchgehende Ladung auf die Abscheidungsfläche aufbringt;
einen Lade-Druckkopf, der selektiv Teile der durchgehenden Ladung von der Abscheidungsfläche entfernt; und
ein Transportsystem (104), das das Aerosolpulver von dem Aerosolgenerator zu der Abscheidungsfläche transportiert, wobei das Transportsystem ein Aerosol-Ladeelement (116) aufweist, das eine Ladung entgegengesetzt zu der durchgehenden Ladung auf das Aerosolpulver aufbringt, so dass das Aerosol Strukturen auf Abschnitten der Abscheidungsfläche bildet, an denen Ladung verbleibt.

2. System nach Anspruch 1, das des Weiteren einen Trägheitsimpaktor in dem Transportsystem (104) umfasst, der Teilchengrößen selektiert.

3. System nach Anspruch 1, das des Weiteren einen Filter in dem Transportsystem umfasst (104).

4. System nach Anspruch 1, das des Weiteren eine Verteilungsvorrichtung zum Verteilen eines Trägermaterials (302) zwischen den Strukturen umfasst.

5. System nach Anspruch 1, das des Weiteren einen beweglichen Tisch (218) umfasst, auf dem die Abscheidungsfläche (214) aufliegt.

6. System nach Anspruch 1, wobei das Oberflächen-Ladeelement (220) ein Korotron umfasst.

7. Additives Fertigungsverfahren, das umfasst:
Erzeugen eines Aerosols (204) aus einem Pulver an einem Aerosolgenerator;
Aufladen des Aerosols, um ein geladenes Aerosol mit einer ersten Ladung zu erzeugen;
Ausbilden einer durchgehenden Ladung auf einer Abscheidungsfläche (214) die eine zweite Ladung mit einer zu der ersten Ladung entgegengesetzten Polarität hat;
selektives Entfernen von Bereichen der durchgehenden Ladung, wobei geladene Bereiche auf der Abscheidungsfläche zurückgelassen werden; und
Transportieren des geladenen Aerosols zu den geladenen Bereichen, um aus dem geladenen Aerosol Strukturen auf den geladenen Regionen auszubilden.

8. Verfahren nach Anspruch 7, das des Weiteren Anwenden von Energie zum Verschmelzen der Strukturen umfasst.

9. Verfahren nach Anspruch 7, das des Weiteren Aufbringen eines Trägermaterials (302) zum Füllen von Zwischenräumen zwischen den Strukturen umfasst.

10. Verfahren nach Anspruch 7, wobei Ausbilden der durchgehenden Ladung auf der Abscheidungsfläche (214) Ausbilden der Ladung unter Verwendung eines Korotrons umfasst.

## Revendications

1. Système de fabrication additive (200), comprenant :
un générateur d'aérosol (206) pour transformer en aérosol une poudre pour produire une poudre en aérosol (204) ;
une surface de dépôt (214) ;
un élément de charge de surface (220) pour appliquer une charge de couverture sur la surface de dépôt ;
une tête d'impression de charge pour retirer de manière sélective des parties de la charge de couverture à partir de la surface de dépôt ; et
un système de transport (104) pour transporter la poudre en aérosol du générateur d'aérosol à la surface de dépôt, le système de transport ayant un élément de charge d'aérosol (116) pour appliquer une charge, opposée à la charge de couverture, à la poudre en aérosol de sorte que l'aérosol forme des structures sur des parties de la surface de dépôt où la charge subsiste.

2. Système selon la revendication 1, comprenant en outre un impacteur inertiel dans le système de transport (104) pour sélectionner des tailles de particules.

3. Système selon la revendication 1, comprenant en outre un filtre dans le système de transport (104).

4. Système selon la revendication 1, comprenant en outre un distributeur pour distribuer un matériau de support (302) entre les structures.

5. Système selon la revendication 1, comprenant en outre une platine mobile (218) sur laquelle repose la surface de dépôt (214) .

6. Système selon la revendication 1, dans lequel l'élément de charge de surface (220) comprend un corotron.

7. Procédé de fabrication additive, comprenant :
la création d'un aérosol (204) à partir d'une poudre au niveau d'un générateur de pulvérisation ;
la charge de l'aérosol pour produire un aérosol chargé ayant une première charge ;
la formation d'une charge de couverture sur une surface de dépôt (214) ayant une seconde charge d'une polarité opposée à la première charge ;
le retrait sélectif de régions de la charge de couverture, ce qui laisse des régions chargées sur la surface de dépôt ; et
le transport de l'aérosol chargé jusqu'aux régions chargées pour former des structures sur les régions chargées à partir de l'aérosol chargé.

8. Procédé selon la revendication 7, comprenant en outre l'application d'énergie pour fondre les structures.

9. Procédé selon la revendication 7, comprenant en outre l'application d'un matériau de support (302) pour remplir des espaces entre les structures.

10. Procédé selon la revendication 7 dans lequel la formation de la charge de couverture sur la surface de dépôt (214) comprend la formation de la charge à l'aide d'un corotron.
